Europäisches Patentamt

European Patent Office

Office européen des brevets

(19)

(11) **EP 1 041 753 B1**

(12) **FASCICULE DE BREVET EUROPEEN**

(45) Date de publication et mention
de la délivrance du brevet:
**14.06.2006 Bulletin 2006/24**

(51) Int Cl.:
*H04B 10/18* (2006.01)    *H04B 10/135* (2006.01)

(21) Numéro de dépôt: **00400668.0**

(22) Date de dépôt: **10.03.2000**

(54) **Dispositif et procédé de compensation de la dispersion de mode de polarisation en fonction de la dispersion chromatique dans un système de transmission optique**

Verfahren und Vorrichtung zur Kompensation der Polarisationsmodendispersion auf Grund von der Farbenzerstreuung in einem optischen Übertragungssystem

Device and method for compensating the polarisation mode dispersion according to the chromatic dispersion in an optical transmission system

(84) Etats contractants désignés:
**AT BE CH CY DE DK ES FI FR GB GR IE IT LI LU MC NL PT SE**

(30) Priorité: **31.03.1999 FR 9904058**

(43) Date de publication de la demande:
**04.10.2000 Bulletin 2000/40**

(73) Titulaire: **ALCATEL**
**75008 Paris (FR)**

(72) Inventeurs:
• **Penninckx, Denis**
**91620 Nozay (FR)**
• **Roy, Fabien**
**91940 Les Ulis (FR)**

(74) Mandataire: **Fournier, Michel Robert Marie et al**
**COMPAGNIE FINANCIERE ALCATEL**
**Département Propriété Industrielle**
**54, rue La Boétie**
**75008 Paris (FR)**

(56) Documents cités:
**EP-A- 0 853 395       US-A- 5 404 413**
**US-A- 5 587 827**

• **NO[1] ET AL.: "Fiber-based distributed PMD compensation at 20 Gb/s" EUROPEAN CONFERENCE ON OPTICAL COMMUNICATION (ECOC'98), 20 - 24 septembre 1998, pages 157-159, XP002126316 Madrid, Spain**
• **SCHLUMP ET AL.: "Electronic equalisation of PMD and chromatic dispersion induced distorsion after 100 km standard fibre at 10 Gbit/s" EUROPEAN CONFERENCE ON OPTICAL COMMUNICATION (ECOC'98), 20 - 24 septembre 1998, pages 535-536, XP002126317 Madrid, Spain**

**Description**

L'invention se situe dans le domaine des transmissions de signaux par des moyens optiques et plus particulièrement des transmissions à haut débit sur des liaisons à longue distance utilisant des fibres optiques.

L'invention concerne un dispositif pour compenser, au moins partiellement, et dynamiquement, la dispersion de polarisation que l'on observe dans les systèmes de transmission à fibre optique.

Un système de transmission à fibre optique comporte typiquement :

- un terminal émetteur utilisant au moins une onde porteuse optique dont il module la puissance et/ou la fréquence optique en fonction de l'information à transmettre,
- une liaison de transmission optique constituée d'au moins une section de fibre monomode acheminant le signal émis par le terminal émetteur,
- et un terminal récepteur recevant le signal optique transmis par la fibre.

La performance d'un système de transmission optique, notamment en termes de qualité de signal et de débit, est limitée notamment par les propriétés optiques de la liaison qui est le siège des phénomènes physiques ayant pour effet de dégrader les signaux optiques. Parmi tous les phénomènes identifiés, l'atténuation de la puissance optique et la dispersion chromatique sont ceux qui sont apparus en premier comme les plus contraignants et pour lesquels on a proposé des moyens pour remédier au moins partiellement aux dégradations qu'ils entraînent.

L'atténuation dans les fibres d'un type donné dépend de la longueur d'onde de la porteuse du signal. Ainsi, les fibres monomodes installées au cours des dix dernières années, appelées "fibres standard", présentent une atténuation minimum pour une longueur d'onde autour de 1,5 $\mu$m, ce qui montre l'intérêt de choisir cette valeur pour les porteuses.

En outre, pour augmenter davantage les distances de transmission, l'atténuation a pu être compensée au moyen d'amplificateurs optiques disposés en amont ou en aval ou tout au long de la liaison.

De même, la dispersion chromatique dépend de la longueur d'onde. Pour les fibres standard, la dispersion chromatique est nulle à 1,3 $\mu$m et vaut environ 1,7 ps/(km.nm) à 1,5 $\mu$m. La faible atténuation à 1,5 $\mu$m a conduit à développer de nouvelles fibres, appelées "fibres à dispersion décalée", pour lesquelles la dispersion chromatique est nulle à cette longueur d'onde.

Toutefois, pour améliorer les performances des fibres standard déjà installées, on a aussi cherché à corriger les effets de la dispersion chromatique de ces fibres à 1,5 $\mu$m.

Une solution consiste à insérer dans la liaison au moins une fibre dispersive de compensation, appelée "fibre de compensation de dispersion" ou DCF (de l'anglais "Dispersion Compensating Fiber"). Ainsi, pour compenser exactement la dispersion chromatique, il suffit que la fibre dispersive ait une longueur et des caractéristiques de dispersion telles que la dispersion cumulée le long de cette fibre de compensation soit égale et opposée à celle créée le long de la fibre de la liaison de transmission.

On peut définir pour l'ensemble de la liaison, y compris la ou les fibre(s) de compensation, une valeur de dispersion cumulée résiduelle DR qui est la somme algébrique des dispersions cumulées DL et DC de la ou des fibre(s) dispersive(s) et de la fibre de la liaison de transmission. Elle peut s'exprimer mathématiquement par la formule :

$$(1) \quad DR = DC + DL = \int D_1(z_1).dz_1 + \int D_2(z_2).dz_2$$

où $z_1$ et $z_2$ sont les abscisses de points placés respectivement le long de la fibre dispersive et le long de la liaison associée, $D_1$ et $D_2$ sont les paramètres de dispersion chromatique respectivement aux abscisses $z_1$ et $z_2$ de la fibre dispersive et de la fibre de la liaison de transmission, les intégrales qui expriment les dispersions cumulées DC et DL étant calculées respectivement le long de la fibre dispersive et le long de la fibre de la liaison de transmission associée, en prenant comme sens positif le sens de propagation des ondes.

Nous rappelons que le paramètre de dispersion D est lié à la constante de propagation P par la relation :

$$d^2\beta/d\omega^2 = -(2\pi c/\omega^2)D \quad,$$

où $\omega$ est la pulsation de l'onde et c la vitesse de la lumière dans le vide.

La condition de compensation exacte de la dispersion chromatique est donc DR = DC + DL = 0.

En réalité, une compensation exacte de la dispersion chromatique n'est pas toujours optimales car la qualité du signal compensé reçu dépend aussi d'autres paramètres de la transmission et en particulier du type de modulation du signal transmis. C'est le cas en particulier si le signal émis présente un "chirp", c'est-à-dire une modulation de fréquence optique accompagnant toute modulation d'amplitude.

En fait, une telle compensation ne s'impose qu'en cas de besoin, c'est-à-dire pour des conditions de transmission (type de fibre, type de modulation, distance de transmission et débits) qui, sans compensation, entraîneraient des taux d'erreur dépassant une valeur limite acceptable commercialement, typiquement de $10^{-15}$. De plus, pour des raison de coût minimum de la fibre de compensation de dispersion, on choisit normalement une valeur de compensation minimum compatible avec le taux d'erreur requis. Ainsi, pour des liaisons suffisamment courtes, on ne cherchera même pas à compenser la dispersion chromatique.

Jusqu'à présent, les compensations évoquées ci-dessus étaient traitées de façon indépendante et faisaient abstraction d'un autre phénomène défavorable appelé "dispersion modal de polarisation". En effet, dans les conditions d'exploitation actuelles des transmissions optiques, ce phénomène a longtemps été considéré comme négligeable par rapport à la dispersion chromatique. Il ne l'est plus dès que l'on cherche à augmenter toujours davantage les longueurs des liaisons et surtout le débit.

Même en l'absence de dispersion chromatique au sens usuel et bien que l'onde porteuse fournie par une diode laser au niveau de l'émetteur soit totalement polarisée, les fibres sont le siège d'une dispersion de polarisation qui a par exemple pour effet qu'une impulsion émise par le terminal émetteur est reçue déformée après sa propagation dans une fibre et présente une durée supérieure à sa durée originale.

Cette déformation est due à la biréfringence des fibres qui a pour effet que le signal optique se dépolarise pendant la transmission. En première approximation, le signal reçu à l'extrémité de la fibre de liaison peut être considéré comme constitué de deux composantes orthogonales, l'une correspondant à un état de polarisation pour lequel la vitesse de propagation est maximale (état principal de polarisation le plus rapide) et l'autre correspondant à un état de polarisation pour lequel la vitesse de propagation est minimale (état principal de polarisation le plus lent). Autrement dit, un signal impulsionnel reçu à l'extrémité de la fibre de liaison peut être considéré comme étant composé d'un premier signal impulsionnel, polarisé suivant un état de polarisation privilégié et arrivant en premier, et d'un second signal impulsionnel se propageant suivant un état de propagation retardé et arrivant avec un retard appelé "retard de groupe différentiel" ou DGD (de l'anglais "Differential Group Delay") qui dépend notamment de la longueur de la fibre de liaison. Ces deux états principaux de polarisation ou PSP (de l'anglais "Principal States of Polarisation") caractérisent donc la liaison.

Par conséquent, si le terminal émetteur émet un signal optique constitué d'une impulsion très brève, le signal optique reçu par le terminal récepteur est constitué de deux impulsions successives polarisées orthogonalement et ayant un décalage temporel égal au DGD. Comme la détection par le terminal consiste à fournir sous forme électrique une mesure de la puissance optique totale reçue, l'impulsion détectée aura une largeur temporelle augmentée en fonction de la valeur du DGD.

Ce retard peut être de l'ordre de 50 picosecondes pour une fibre standard de 100 kilomètres de longueur. La déformation des impulsions reçues par le terminal récepteur peut causer des erreurs de décodage des données transmises, par conséquent la dispersion de polarisation constitue un facteur limitant les performances des liaisons optiques, aussi bien analogiques que numériques.

Actuellement, on sait fabriquer des fibres monomodes à faible dispersion de polarisation (environ 0,05 ps/√km). Cependant, le problème subsiste pour les "fibres standard" installées et qui présentent des dispersions de polarisation très élevées constituant un obstacle technique majeur pour l'augmentation des débits transmis. D'autre part, ce problème réapparaîtra aussi pour les fibres à faible dispersion de polarisation lorsqu'on voudra encore augmenter le débit.

Par ailleurs, on sait réaliser des fibres à forte dispersion de polarisation, appelées aussi fibres à maintien de polarisation ou PMF (de l'anglais "Polarisation Maintaining Fiber"), qui permettent, en utilisant des tronçons de faible longueur, de procurer un retard différentiel fixe avec des états principaux de polarisation invariables. En disposant judicieusement un tel composant (ou tout dispositif générateur de retard différentiel entre deux modes de polarisation orthogonaux) en série avec une liaison de transmission présentant une dispersion de polarisation, on peut réaliser une compensation optique de la dispersion de polarisation. Ceci peut être réalisé soit en utilisant une fibre à maintien de polarisation de même retard différentiel que la liaison, mais en échangeant les états principaux de polarisation lent et rapide, soit en faisant coïncider un état principal de polarisation de l'ensemble constitué par la liaison et la fibre à maintien de polarisation avec l'état de polarisation de la source à l'émission. Pour ce faire, on utilise un contrôleur de polarisation que l'on place entre la liaison et la fibre à maintien de polarisation.

Un aspect important du phénomène de dispersion modal de polarisation est que la valeur du retard différentiel DGD et les états principaux de polarisation d'une liaison varient dans le temps en fonction de nombreux facteurs, tels que les vibrations et la température. Ainsi, contrairement à la dispersion chromatique, la dispersion de polarisation doit être considérée comme un phénomène aléatoire. En particulier, on caractérisera la dispersion de polarisation d'une liaison par une valeur dite "PMD" (de l'anglais "Polarisation Mode Dispersion Delay") définie comme la valeur moyenne de DGD mesuré. Plus précisément, on montre que la dispersion de polarisation peut être représentée par un vecteur de rotation aléatoire $\Omega$ dans l'espace des vecteurs de Stokes où l'on représente habituellement les états de polarisation au moyen de la sphère de Poincaré.

Une autre conséquence de ce caractère aléatoire est qu'un dispositif de compensation doit être adaptatif et le retard différentiel de la fibre à maintien de polarisation choisi de façon à être au moins égal aux valeurs de retard différentiel que l'on veut compenser. Un tel dispositif de compensation est décrit dans la demande de brevet européen EP-A-853 395 déposée le 30 décembre 1997 et publiée le 15 juillet 1998.

Un problème qui est apparu lors d'études sur la compensation de la PMD est celui des influences combinées de la dispersion de polarisation et de la dispersion chromatique. On s'est aperçu qu'en réalité la compensation de la PMD était très sensible à la valeur de dispersion chromatique résiduelle de la liaison dans son ensemble et donc à l'existence et à la valeur choisie de compensation de dispersion chromatique.

Un dispositif visant la compensation simultanée de la dispersion chromatique et de la dispersion de polarisation est décrit dans XP002126317.

En particulier, on a observé la nécessité d'introduire une compensation précise de dispersion chromatique même pour des liaisons pour lesquelles une telle compensation n'aurait pas été nécessaire enabsent PMD.

On s'est également aperçu que la valeur optimal de compensation de dispersion chromatique à appliquer en présence de PMD ne correspond pas toujours a la valeur optimale de compensation qu'on appliquerait en l'absence de PMD.

Aussi, l'invention a pour but d'améliorer l'efficacité de la compensation de la dispersion de polarisation en tenant compte des observations précédentes.

Dans ce but, l'invention a pour objet un dispositif de compensation pour système de transmission optique comportant un terminal émetteur éntettant un signal optique polarisé, une fibre optique de transmission, éventuellement des amplificateurs optiques et un terminal récepteur, ce dispositif comportant des premiers moyens de compensation de la dispersion de polarisation comprenant:

- au moins un contrôleur de polarisation,
- des moyens pour engendrer un retard différentiel entre deux modes de polarisation orthogonaux, ce contrôleur et ces moyens étant intercalés entre la fibre de transmission et le terminal récepteur dans cet ordre,
- et des moyens d'asservissement du contrôleur de polarisation,

caractérisé en ce qu'il comporte en outre des seconds moyens de compensation de dispersion chromatique intercalés entre lesdits terminaux émetteur et récepteur, lesdits seconds moyens de compensation appliquant une compensation de valeur fixe qui tend à minimiser le taux d'erreur affectant les signaux reçus par le terminal récepteur.

La détermination de la valeur de compensation de dispersion chromatique qui minimise le taux d'erreur n'est toutefois pas facilement réalisable directement. En effet, à cause du caractère aléatoire de la PMD, une telle méthode nécessiterait beaucoup de temps aussi bien par expérimentation que par simulation.

En pratique, on peut définir cette valeur de façon indirecte au moyen d'une courbe de pénalité en puissance établie en fonction de la compensation de dispersion chromatique appliquée dans une liaison de mêmes propriétés optiques mais ne présentant pas de dispersion de polarisation. La pénalité en puissance pour une valeur donnée de compensation de dispersion chromatique se mesure alors par le rapport (exprimé en dB) des puissances moyennes minimales que doit avoir le signal reçu pour conserver un même taux d'erreur au niveau du récepteur avec cette valeur donnée de compensation et avec la compensation qui nécessite la plus faible puissance moyenne minimale.

Aussi, selon un aspect particulier de l'invention, le dispositif de compensation est caractérisé en ce que ladite valeur fixe est égale à la moyenne de valeurs minimum et maximum de compensation de dispersion chromatique pour lesquelles la pénalité en puissance établie en fonction de la compensation de dispersion chromatique appliquée est de l'ordre de 1 dB

Ainsi, la recherche de la valeur de compensation à appliquer s'effectue en dehors du contexte aléatoire inhérent à la PMD, mais la solution proposée tient compte de cet aspect aléatoire en améliorant la tolérance du système à la dispersion chromatique.

L'invention a également pour objet un procédé de compensation correspondant au dispositif défini ci-dessus. Ce procédé réalise une première compensation de la dispersion de polarisation et est caractérisé en ce qu'il comporte une seconde compensation de dispersion chromatique utilisant des moyens de compensation de dispersion chromatique intercalés entre lesdits terminaux émetteur et récepteur, ladite seconde compensation ayant une valeur fixe qui tend à minimiser le taux d'erreur affectant les signaux reçus par le terminal récepteur.

L'invention a aussi pour objet un système de transmission optique incorporant le dispositif de compensation défini ci-dessus. Le système peut être monocanal, c'est-à-dire prévu pour véhiculer un signal porté par une seule longueur d'onde ou à multiplexage en longueur d'onde ("WDM"), c'est-à-dire pour véhiculer un signal composé de plusieurs canaux portés par des longueurs d'onde différentes. Dans ce dernier cas, il convient d'appliquer pour chacun des canaux une compensation spécifique. Pour cela, le dispositif selon l'invention comporte des moyens pour extraire au moins l'un des canaux et au moins un dispositif de compensation associé à ce canal.

D'autres aspects et avantages de l'invention apparaîtront dans la suite de la description en référence aux figures.

- La figure 1 représente schématiquement un système de transmission optique comportant le dispositif de compensation selon l'invention.
- La figure 2 est une courbe de pénalité en puissance en fonction de la compensation de dispersion chromatique appliquée dans une liaison ne présentant pas de dispersion de polarisation
- Les figures 3 à 6 représentent des courbes expérimentales de mesures de taux d'erreur permettant d'apprécier l'efficacité de la compensation selon l'invention.

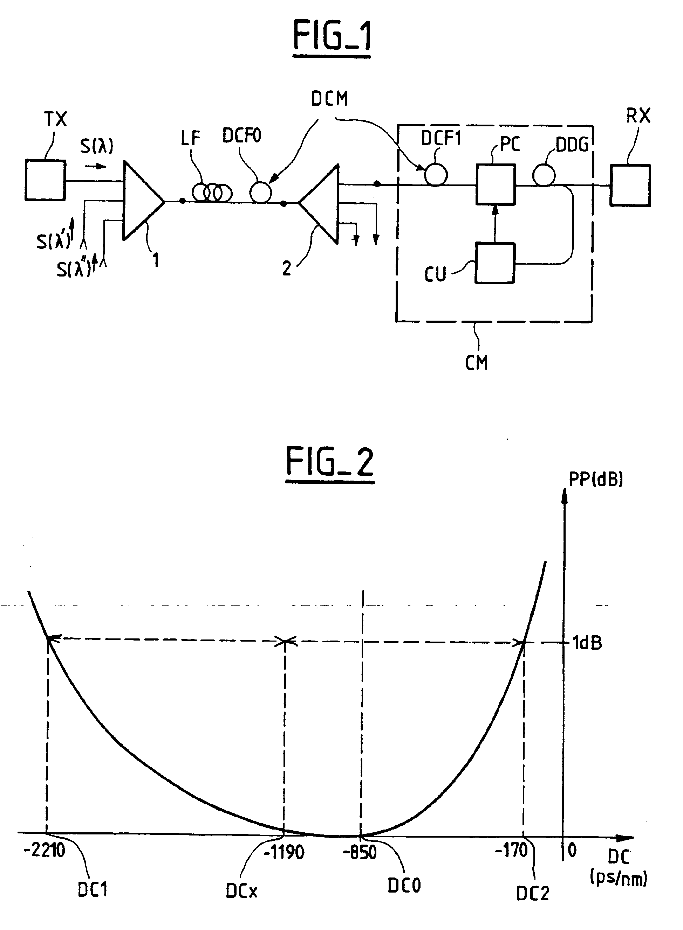

La figure 1 montre schématiquement et à titre d'exemple un système de transmission optique muni du dispositif de compensation selon l'invention.

L'exemple représenté est un système à multiplexage en longueur d'onde prévu pour véhiculer plusieurs canaux S$\lambda$, S$\lambda'$, S$\lambda''$ portés respectivement par les longueurs d'onde $\lambda$, $\lambda'$, $\lambda''$. Chaque canal, par exemple S$\lambda$, est issu d'un un terminal émetteur TX émettant un signal optique ayant la forme d'une modulation d'amplitude (et/ou de fréquence optique) d'une onde porteuse polarisée. Les canaux sont combinés dans un multiplexeur 1 dont la sortie est couplée à une liaison optique de transmission. Cette liaison est typiquement constituée d'une fibre optique LF et peut comporter des amplificateurs optiques (non représentés) disposés en amont et/ou en aval de la fibre. La liaison peut aussi être composée de plusieurs sections de fibre entre lesquels sont placés des amplificateurs optiques.

L'extrémité de la liaison rejoint au moins un terminal récepteur, par exemple RX, par l'intermédiaire d'un démultiplexeur 2 ayant pour fonction d'extraire le canal destiné au récepteur RX.

Le système comporte des moyens de compensation de la dispersion de polarisation CM disposés entre le démultiplexeur 2 et comprenant :

- au moins un contrôleur de polarisation PC,
- des moyens DDG pour engendrer un retard différentiel entre deux modes de polarisation orthogonaux, ce contrôleur et ces moyens étant intercalés entre la fibre de transmission et le terminal récepteur dans cet ordre,
- et des moyens d'asservissement CU du contrôleur de polarisation PC.

La constitution détaillée du compensateur CM et les explications correspondantes sont indiquées dans la demande de brevet européen EP-A-853 395 précitée. On rappelle que les moyens d'asservissement CU sont par exemple prévus pour maximiser le degré de polarisation du signal issu du dispositif à retard différentiel DDG, lequel est typiquement constitué d'une fibre à maintien de polarisation PMF. D'autres méthodes d'asservissement visant à minimiser le taux d'erreur peuvent être employées, comme par exemple un asservissement conçu pour minimiser la largeur spectrale de la modulation du signal électrique obtenu par détection du signal optique issu du dispositif à retard différentiel DDG.

Conformément à l'invention, le dispositif de compensation est complété par moyens de compensation de dispersion chromatique DCM. Ces moyens sont ici constitués d'une première fibre dispersive DCF0 placée en amont du démultiplexeur 2 et en série avec la fibre de transmission (LF) et d'une seconde fibre dispersive DCF1 placée entre le démultiplexeur 2 et le récepteur RX. Cette disposition permet d'appliquer pour l'ensemble des canaux une compensation commune grâce à DCF0 et une compensation spécifique pour chacun des canaux grâce à DCF1.

Enfin, les fibres dispersives DCF0 et DCF1 sont choisies de façon à appliquer une compensation de valeur fixe DCx qui tend à minimiser le taux d'erreur affectant les signaux reçus par le terminal récepteur RX.

Le cas d'un système monocanal se distingue du cas précédent par l'absence du multiplexeur 1 et du démultiplexeur 2.

Si on ne tient pas compte d'autres phénomènes tels que les effets non linéaires, on peut noter que l'emplacement de la ou des fibre(s) dispersive(s) qui constituent les moyens de compensation de dispersion chromatique DCM n'est pas déterminant car seule la valeur de dispersion chromatique résiduelle de la liaison dans son ensemble est importante. Toutefois, pour des raisons pratiques, il peut être préférable de placer la ou des fibre(s) dispersive(s) à proximité du récepteur.

Comme déjà signalé précédemment, la détermination de la valeur de compensation de dispersion chromatique qui minimise le taux d'erreur n'est pas très facile à réaliser par mesures directes du taux d'erreur portant sur les signaux transmis par une liaison qui est le siège de PMD. Le caractère aléatoire de la PMD nécessite des méthodes statistiques très coûteuses en temps aussi bien par expérimentation que par simulation.

Pour contourner cette difficulté, il est proposé de déterminer la valeur de compensation de dispersion chromatique au moyen d'une courbe de pénalité en puissance établie en fonction de la compensation de dispersion chromatique appliquée dans une liaison de mêmes propriétés optiques mais ne présentant pas de dispersion de polarisation. Une telle solution a donc pour effet d'éliminer l'aspect aléatoire dû à la PMD.

Dans ce contexte, la pénalité en puissance pour une valeur donnée de compensation de dispersion chromatique est définie pour liaison sans PMD comme le rapport (exprimé en dB) des puissances moyennes minimales que doit avoir le signal reçu pour conserver un même taux d'erreur au niveau du récepteur avec cette valeur donnée de compensation et avec la compensation qui nécessite la plus faible puissance moyenne minimale.

Cette courbe peut être obtenue par simulation ou expérimentalement au moyen d'une fibre à très faible dispersion de polarisation mais équivalente par ailleurs à la liaison réelle à compenser.

A titre d'illustration, la figure 2 montre une telle courbe de pénalité en puissance pour le cas particulier d'une transmission d'un signal NRZ avec un "chirp" négatif, à un débit de 10 Gbit/s sur une fibre standard [D = 17 ps/(nm.km)] de 100 km.

La pénalité PP est exprimée en décibels et la compensation de dispersion chromatique DC est exprimée en picosecondes par nanomètre.

On peut d'abord observer qu'une pénalité de 1 dB environ est obtenue pour deux valeurs DC1 = -2210 ps/nm et DC2 = -170 ps/nm. Compte tenu de la forte pente de la courbe respectivement en deçà et au-delà de DC1 et DC2, ces valeurs constituent les limites entre lesquelles se situeraient les valeurs acceptables de la compensation en l'absence de PMD.

Ainsi, une approche classique pour déterminer la compensation à appliquer consisterait à choisir pour des raisons économiques la valeur la plus faible qui correspond à une pénalité requise. Or ce critère n'est généralement plus acceptable si l'on tient compte de la PMD. Il est par contre nécessaire que la compensation de dispersion chromatique prenne une valeur bien précise qui assure une tolérance maximale vis-à-vis du comportement aléatoire de la PMD.

Ceci peut s'expliquer par le fait que le retard différentiel ainsi que les états principaux de polarisation de la liaison dépendent de la fréquence optique (effets d'ordres supérieurs). En première approximation, le comportement aléatoire de la PMD a donc pour effet que la courbe de pénalité de la liaison réelle subit des translations aléatoires autour d'un point moyen de compensation.

La solution proposée vise à évaluer en pratique ce point moyen en choisissant comme valeur de compensation celle DCx qui est égale à la moyenne des valeurs minimum DC1 et maximum DC2 de compensation de dispersion chromatique pour lesquelles la pénalité en puissance est de l'ordre de 1 dB. Dans l'exemple représenté, on a DCx = -1190 ps/nm.

Par ailleurs, on peut noter que la courbe n'est généralement pas symétrique de part et d'autre de la verticale passant par le point de pénalité minimale correspondant à la valeur de compensation DC0 = -850 ps/nm. Cela implique que les compensations optimales pour des liaisons avec et sans PMD sont généralement différentes.

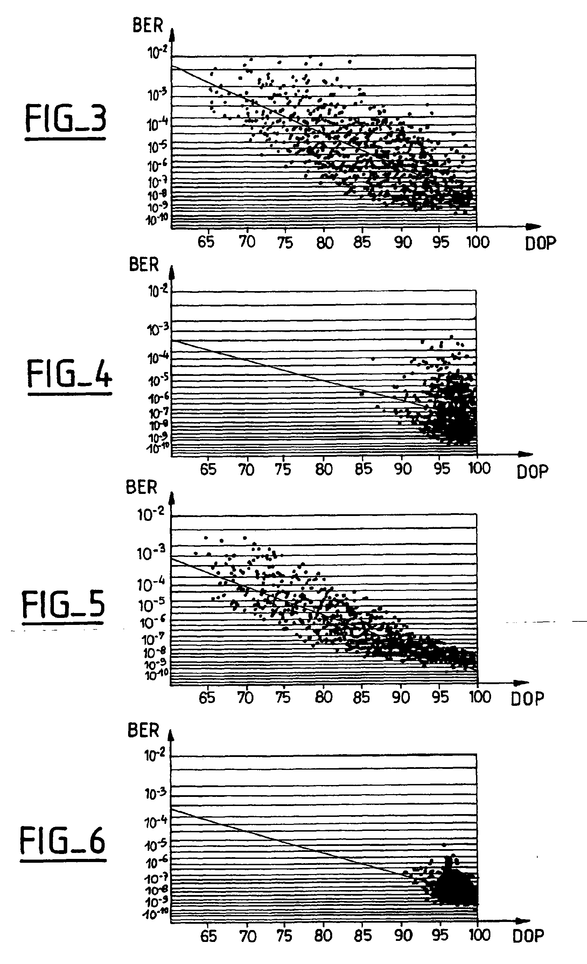

Les courbes expérimentales représentées aux figures 3 à 6 permettent de vérifier l'efficacité de la solution. Chacune de ces figures représente des constellations de points correspondant chacun à une valeur mesurée de taux d'erreur binaire BER en fonction du degré de polarisation DOP du signal issu du dispositif de retard différentiel DDG. Elles concernent chacune l'exemple de transmission précédent où un bruit d'un niveau constant a été ajouté au signal de façon à limiter la durée des mesures.

La figures 3 correspond au cas où on ne compense ni la PMD ni la dispersion chromatique.

La figures 4 correspond au cas où on ne compense que la PMD.

La figures 5 correspond au cas où on ne compense que la dispersion chromatique.

La figures 6 correspond au cas où on compense selon l'invention à la fois la PMD et la dispersion chromatique.

Cette dernière figure montre la nette amélioration statistique du taux d'erreur obtenue.

## Revendications

**1.** Dispositif de compensation pour système de transmission optique comportant un terminal émetteur (TX) émettant un signal optique polarisé (S), une fibre optique de transmission (LF), éventuellement des amplificateurs optiques et un terminal récepteur (RX), ce dispositif comportant des premiers moyens de compensation de la dispersion de polarisation comprenant :

    - au moins un contrôleur de polarisation (PC),
    - des moyens (DDG) pour engendrer un retard différentiel entre deux modes de polarisation orthogonaux, ce contrôleur et ces moyens étant intercalés entre la fibre de transmission et le terminal récepteur dans cet ordre,
    - et des moyens d'asservissement (CU) du contrôleur de polarisation (PC),

**caractérisé en ce qu'**il comporte en outre des seconds moyens de compensation de dispersion chromatique (DCM, DCF0) intercalés entre lesdits terminaux émetteur et récepteur (TX, RX), lesdits seconds moyens (DCM, DCF0) appliquant une compensation de valeur fixe (DCx) qui tend à minimiser le taux d'erreur affectant les signaux reçus par le terminal récepteur (RX).

2. Dispositif de compensation selon la revendication 1, **caractérisé en ce que** ladite valeur fixe (DCx) est égale à la moyenne de valeurs minimum (DC1) et maximum (DC2) de compensation de dispersion chromatique pour lesquelles la pénalité en puissance établie en fonction de la compensation de dispersion chromatique appliquée est de l'ordre de 1 dB pour une liaison de mêmes propriétés optiques mais ne présentant pas de dispersion de polarisation.

3. Procédé de compensation pour système de transmission optique comportant un terminal émetteur (TX) émettant un signal optique polarisé (S), une fibre optique de transmission (LF), éventuellement des amplificateurs optiques et un terminal récepteur (RX), ce procédé réalisant une première compensation de la dispersion de polarisation, **caractérisé en ce qu'**il comporte une seconde compensation de dispersion chromatique (DC) utilisant des moyens de compensation de dispersion chromatique (DCM, DCF0) intercalés entre lesdits terminaux émetteur et récepteur (TX, RX), ladite seconde compensation ayant une valeur fixe (DCx) qui tend à minimiser le taux d'erreur affectant les signaux reçus par le terminal récepteur (RX).

4. Procédé selon la revendication 3, **caractérisé en ce que** ladite valeur fixe (DCx) est égale à la moyenne de valeurs minimum (DC1) et maximum (DC2) de compensation de dispersion chromatique pour lesquelles la pénalité en puissance établie en fonction de la compensation de dispersion chromatique appliquée est de l'ordre de 1 dB pour une liaison de mêmes propriétés optiques mais ne présentant pas de dispersion de polarisation.

5. Système de transmission optique, **caractérisé en ce qu'**il comporte un dispositif de compensation selon l'une des revendications 1 ou 2.

6. Système de transmission optique pour signal à plusieurs canaux multiplexés en longueurs d'onde (Sλ, Sλ', Sλ"), **caractérisé en ce qu'**il comporte des moyens (2) pour extraire au moins l'un desdits canaux (Sλ) et au moins un dispositif de compensation (CM, DCF0) associé audit canal extrait conforme à l'une des revendications 1 ou 2.

7. Système de transmission optique selon la revendication 6, **caractérisé en ce que** lesdits moyens de compensation de dispersion chromatique (DCM, DCF0) comportent une première fibre dispersive (DCF0) placée en amont desdits moyens d'extraction (2) et en série avec ladite fibre optique de transmission (LF), et une seconde fibre dispersive (DCF1) placée entre lesdits moyens d'extraction (2) et ledit terminal récepteur (RX).

## Claims

1. A compensating device for an optical transmission system including a transmitter terminal (TX) adapted to output a polarized optical signal (S), a transmission optical fiber (LF), possibly optical amplifiers, and a receiver terminal (RX), the compensating device including a first polarization dispersion compensation means including:

· a polarization controller (PC),
· a differential delay generator means (DDG) for generating a differential delay between two orthogonal polarization modes, said controller and said generator means being inserted between the transmission fiber and the receiver terminal, in that order, and
a control means (CU) for controlling the polarization controller (PC),

**characterized in that** it further includes a second chromatic dispersion compensator means (DCM, DCF0) inserted between said transmitter and receiver terminals (TX, RX), said second compensator means (DCM, DCF0) applying compensation of fixed value (DCx) which tends to minimize the error rate of signals received by the receiver terminal (RX).

2. A compensating device according to claim 1, **characterized in that** said fixed compensation value (DCx) is equal to the average of a minimum chromatic dispersion compensation value (DC1) and a maximum chromatic dispersion compensation value (DC2) for which a power penalty established as a function of the chromatic dispersion compensation applied is in the order of 1 dB for a link having the same optical properties but no polarization dispersion.

3. A method of compensating chromatic dispersion in an optical transmission system including a transmitter terminal (TX) adapted to output a polarized optical signal (S), a transmission optical fiber (LF), possibly optical amplifiers, and a receiver terminal (RX), said method applying a first stage of polarization dispersion compensation, **charac-**

**terized in that** it also provides a second stage of chromatic dispersion compensation (DC) using chromatic dispersion compensator means (DCM, DCF0) inserted between said transmitter and receiver terminals (TX, RX), said second stage of compensation having a fixed value (DCx) which tends to minimize the error rate of signals received by the receiver terminal (RX).

**4.** A method according to claim 3, **characterized in that** said fixed value (DCx) is equal to the average of a minimum chromatic dispersion compensation value (DC1) and a maximum chromatic dispersion compensation value (DC2) for which a power penalty established as a function of the chromatic dispersion compensation applied is in the order of 1 dB for a link having the same optical properties but no polarization dispersion.

**5.** An optical transmission system, **characterized in that** it includes a compensating device according to either claim 1 or claim 2.

**6.** An optical transmission system for transmitting signals with a plurality of wavelength division multiplex channels (Sλ, Sλ', Sλ"), **characterized in that** it includes channel extractor means (2) for extracting a channel (Sλ) and a compensating device (CM, DCF0) associated with the extracted channel and as claimed in either claim 1 or claim 2.

**7.** An optical transmission system according to claim 6, **characterized in that** said chromatic dispersion compensator (DCM, DCF0) includes a first dispersion compensating fiber (DCF0) upstream of said extractor means (2) and in series with said transmission optical fiber (LF) and a second dispersion compensating fiber (DCF1) located between said extractor means (2) and said receiver terminal (RX).

**Patentansprüche**

**1.** Vorrichtung zur Kompensation für ein optisches Übertragungssystem, bestehend aus einer Sendestation (TX), die ein polarisiertes optisches Signal (S) versendet, einer optischen Übertragungsfaser (LF), eventuell optischen Verstärkern und einer Empfangsstation (RX), wobei diese Vorrichtung erste Einrichtungen zur Kompensation der Polarisationsdispersion umfasst, bestehend aus:

- mindestens einem Polarisations-Controller (PC),
- Einrichtungen (DDG) zur Erzeugung einer Differenzialverzögerung zwischen zwei orthogonalen Polarisationsmoden, wobei dieser Controller und diese Einrichtungen in dieser Reihenfolge zwischen die Übertragungsfaser und die Empfangsstation geschaltet sind,
- und Einrichtungen zur Regelung (CU) des Polarisations-Controllers (PC),

**dadurch gekennzeichnet, dass** sie außerdem zweite Einrichtungen zur Kompensation der Farbenstreuung (DCM, DCF0) umfasst, die zwischen die genannte Empfangs- und die Sendestation (TX, RX) geschaltet sind, wobei die genannten zweiten Einrichtungen (DCM, DCF0) eine Festwert-Kompensation (DCx) vornehmen, die dazu dient, die Fehlerrate zu minimieren, die die von der Empfangsstation (RX) empfangenen Signale beeinträchtigt.

**2.** Vorrichtung zur Kompensation gemäß Anspruch 1, **dadurch gekennzeichnet, dass** der genannte Festwert (DCx) dem Durchschnitt der Mindest- (DC1) und der Höchstwerte (DC2) für die Farbenstreuungskompensation entspricht, für die der Leistungsverlust, der in Abhängigkeit von der vorgenommenen Farbenstreuungs-Kompensation ermittelt wird, für eine Verbindung mit den gleichen optischen Eigenschaften, jedoch ohne Polarisationsdispersion, in einer Größenordnung von 1 dB liegt.

**3.** Kompensationsverfahren für ein optisches Übertragungssystem, bestehend aus einer Sendestation (TX), die ein polarisiertes optisches Signal (S) versendet, einer optischen Übertragungsfaser (LF), eventuell optischen Verstärkern und einer Empfangsstation (RX), wobei dieses Verfahren eine erste Kompensation der Polarisationsdispersion ausführt, **dadurch gekennzeichnet, dass** es eine zweite Kompensation der Farbenstreuung (DC) ausführt, wobei es Einrichtungen zur Kompensation der Farbenstreuung (DCM, DCF0) einsetzt, die zwischen die genannte Sende- und die Empfangsstation (TX, RX) geschaltet sind, wobei diese zweite Kompensation einen Festwert (DCx) aufweist, der dazu dient, die Fehlerrate zu minimieren, die die von der Empfangsstation (RX) empfangenen Signale beeinträchtigt.

**4.** Verfahren gemäß Anspruch 3, **dadurch gekennzeichnet, dass** der genannte Festwert (DCx) dem Durchschnitt der Mindest- (DC1) und der Höchstwerte (DC2) für die Farbenstreuungskompensation entspricht, für die der Leistungsverlust, der in Abhängigkeit von der vorgenommenen Farbenstreuungs-Kompensation ermittelt wird, für eine Verbindung mit den gleichen optischen Eigenschaften, jedoch ohne Polarisationsdispersion, in einer Größenordnung von 1 dB liegt.

5. Optisches Übertragungssystem, **dadurch gekennzeichnet, dass** es eine Kompensationsvorrichtung gemäß einem der Ansprüche 1 oder 2 umfasst.

6. Optisches Übertragungssystem für Mehrkanal-Signale mit Wellenlängen-Multiplexing (S$\lambda$, S$\lambda$', S$\lambda$"), **dadurch gekennzeichnet, dass** es Einrichtungen (2) zum Ausfiltern mindestens eines der genannten Kanäle (S$\lambda$) und mindestens eine Kompensationsvorrichtung (CM, DCF0) umfasst, die mit dem genannten ausgefilterten Kanal gemäß einem der Ansprüche 1 oder 2 verbunden ist.

7. Optisches Übertragungssystem gemäß Anspruch 6, **dadurch gekennzeichnet, dass** die genannten Einrichtungen zur Farbenstreuungskompensation (DCM, DCF0) eine erste Dispersionsfaser (DCF0) umfassen, die vor den genannten Filtereinrichtungen (2) und in Reihe mit der genannten optischen Übertragungsfaser (LF) angeordnet ist, sowie eine zweite Dispersionsfaser (DCF1), die zwischen den genannten Filtereinrichtungen (2) und der genannten Empfangsstation (RX) angeordnet ist.

# FIG_1

# FIG_2

FIG_3

FIG_4

FIG_5

FIG_6